# EUROPEAN PATENT APPLICATION

(11) **EP 4 778 403 A1**
(43) Date of publication of application: **22.07.2026**
(21) Application number: 24865212.5
(22) Date of filing: 26.08.2024
(51) Int. Cl.: A23L 29/10, A23L 23/00, A23L 27/00

(54) **METHOD FOR PRODUCING NANOEMULSION-CONTAINING COMPOSITION**

(30) Priority: 13.09.2023 JP 2023148030
(71) Applicant: Fuji Oil Company, Limited, Izumisano-shi Osaka 598-8540 (JP)
(72) Inventor: MIZUSHIMA, Shigeki, Tsukubamirai-shi, Ibaraki 300-2436 (JP)
(74) Representative: Becker, Eberhard
(86) International application number: PCT/JP2024/030204
(87) International publication number: WO 2025/057708

(57) **Abstract**

The present invention addresses the problem of improving heat resistance of a nanoemulsion-containing composition that contains 0.01-5 mass% of an oil-in-water nanoemulsion having an emulsion particle diameter of 100 nm or less as an oily phase and has ionic strength of 0.02-5 mol/L. One or more components selected from enzyme-treated lecithin, organic acid monoglycerides and ascorbic acid fatty acid esters are added to an aqueous phase of a nanoemulsion-containing composition satisfying the following requirements (A) and (B), wherein the one or more components are added in an amount that is 0.1-20 times by mass with respect to the amount of an oily phase comprising the oil-in-water nanoemulsion mentioned in (A). (A) An oil-in-water nanoemulsion having an emulsion particle diameter of 100 nm or less is contained in an amount of 0.01-5 mass% as an oily phase; and (B) the ionic strength of the composition is 0.02-5 mol/L.

## Description

### Technical Field

The present invention relates to an oil-in-water nanoemulsion-containing composition and a method for producing the same.

### Background Art

Functional ingredients in food including polyphenols and carotenoids are known to be effective in maintaining health and preventing diseases. However, most of them are unstable to heat, light, oxygen, and the like, and are often fat-soluble, that is, oily materials, and thus, have low bioavailability. It has been known that the absorption of fat-soluble functional ingredients in food into the body can be improved by emulsification, and the absorption efficiency increases as the particle size of the emulsified particles decreases. This is not limited to the functional ingredients in food, and can also be said for the energy efficiency of oil and/or fat. An oil-in-water emulsion having an emulsion particle size of 100 nm or less, referred to as a nanoemulsion, exhibits particularly superior performance in these functions.

When the nanoemulsion is incorporated into foods and distributed, heat sterilization is generally carried out for water-based foods by retort sterilization or ultra-high-temperature (UHT) sterilization, for example. While it is well known that the emulsion becomes unstable during the heat sterilization, in the case of a nanoemulsion, the functionality can be significantly reduced. Furthermore, many water-based foods other than water or flavored water contain a certain amount of salt and have specific ionic strengths, and under such conditions, the emulsion stability of a nanoemulsion is greatly reduced.

Patent Document 1 proposes a salt-resistant oil-in-water liquid emulsion containing an emulsifier containing a polyglycerin-condensed ricinoleic acid ester in combination with monoglyceride citrate and/or monoglyceride succinate.

Patent Document 2 proposes a nanoemulsion composition containing a phospholipid, an oil component, and a surfactant, wherein the content of the surfactant exceeds 0.5 times the content of the oil component and exceeds 5 times the content of the phospholipid.

### Citation List

### Patent Document

Patent Document 1: JP 1989-210029 A
Patent Document 2: JP 2008-154577 A

### Summary of Invention

### Technical Problem

The oil-in-water emulsion disclosed in Patent Document 1 does not include any description regarding the particle size, and the emulsion stability upon heating is not sufficient. The emulsion disclosed in Patent Document 2 cannot be regarded as having sufficient resistance to heat sterilization under the ionic strength of general water-based foods.

An object of the present invention is to improve the heat resistance of a nanoemulsion-containing composition having an ionic strength of 0.02 to 5 mol/ L and containing 0.01 to 5 mass% of an oil-in-water nanoemulsion having an emulsion particle size of 100 nm or less as an oil phase.

### Solution to Problem

The present inventor has conducted intensive studies to solve the above problems, and as a result, have found that the heat resistance of an oil-in-water nanoemulsion-containing composition having an ionic strength of 0.02 to 5 mol/ L is improved by adding one or more selected from an enzymatically treated lecithin, an organic acid monoglyceride, and an ascorbic acid fatty acid ester to an aqueous phase of the emulsion, and thus, has completed the present invention.

That is, the present invention provides:
(1) A method for producing a nanoemulsion-containing composition, the method including all of the following [1] to [3]:
   [1]: providing an oil-in-water nanoemulsion having an emulsion particle size of 100 nm or less;
   [2]: diluting the oil-in-water nanoemulsion of [1], and preparing a nanoemulsion-containing composition satisfying the following requirements (A) and (B); and
   [3]: adding one or more selected from an enzymatically treated lecithin, an organic acid monoglyceride, and an ascorbic acid fatty acid ester to an aqueous phase of the oil-in-water nanoemulsion of [1] and/or an aqueous phase of the nanoemulsion-containing composition of [2] in an amount of 0.1 to 20 times the mass of an oil phase of the oil-in-water nanoemulsion of [1];
      (A): the nanoemulsion-containing composition contains 0.01 to 5 mass% of the oil-in-water nanoemulsion of [1] as an oil phase; and
      (B): the nanoemulsion-containing composition has an ionic strength of 0.02 to 5 mol/ L.
(2) The method for producing a nanoemulsion-containing composition according to (1), wherein the oil-in-water nanoemulsion to be diluted contains 1 to 35 mass% of the oil phase.
(3) The method for producing a nanoemulsion-containing composition according to (1), wherein the nanoemulsion contains a protein material having the following properties [1] and [2]:
   [1]: after an aqueous solution having a crude protein content of 20 mass% is heated at 80°C for 30 minutes, the aqueous solution has a viscosity of 10,000 mPa·s or less as measured at 25°C; and
   [2]: the protein material has a TCA solubilization rate of 30% to 95% in 0.22 M TCA.
(4) The method for producing a nanoemulsion-containing composition according to (1), wherein the oil-in-water nanoemulsion to be diluted contains 1 to 35 mass% of the oil phase, and the nanoemulsion contains a protein material having the following properties [1] and [2]:
   [1]: after an aqueous solution having a crude protein content of 20 mass% is heated at 80°C for 30 minutes, the aqueous solution has a viscosity of 10,000 mPa·s or less as measured at 25°C; and
   [2]: the protein material has a TCA solubilization rate of 30% to 95% in 0.22 M TCA.
(5) A method for producing a nanoemulsion-containing food, including further heat-sterilizing the nanoemulsion-containing composition according to any one of (1) to (3).
(6) A method for producing a nanoemulsion-containing food, including further heat-sterilizing the nanoemulsion-containing composition according to (4).
(7) A method for improving heat resistance of a nanoemulsion-containing composition, the method including adding one or more selected from an enzymatically treated lecithin, an organic acid monoglyceride, and an ascorbic acid fatty acid ester to an aqueous phase of a nanoemulsion-containing composition satisfying the following requirements (A) and (B) in an amount of 0.1 to 20 times the mass of an oil phase of an oil-in-water nanoemulsion of (A):
   (A): the nanoemulsion-containing composition contains 0.01 to 5 mass% of the oil-in-water nanoemulsion having an emulsion particle size of 100 nm or less as an oil phase; and
   (B): the nanoemulsion-containing composition has an ionic strength of 0.02 to 5 mol/ L.
(8) The method for improving heat resistance of a nanoemulsion-containing composition according to (7), wherein the improvement in heat resistance is with respect to heating for the purpose of sterilization.
(9) The method for improving heat resistance of a nanoemulsion-containing composition according to (7) or (8), wherein the oil-in-water nanoemulsion contains a protein material having the following properties [1] and [2]:
   [1]: after an aqueous solution having a crude protein content of 20 mass% is heated at 80°C for 30 minutes, the aqueous solution has a viscosity of 10,000 mPa·s or less as measured at 25°C; and
   [2]: the protein material has a TCA solubilization rate of 30% to 95% in 0.22 M TCA.
(10) The method for improving heat resistance of a nanoemulsion-containing composition according to (9), wherein the nanoemulsion-containing composition is a nanoemulsion-containing food.
(11) The method for improving heat resistance of a nanoemulsion-containing composition according to (7), wherein the improvement in heat resistance is with respect to heating for the purpose of sterilization, and the oil-in-water nanoemulsion contains a protein material having the following properties [1] and [2]:
   [1]: after an aqueous solution having a crude protein content of 20 mass% is heated at 80°C for 30 minutes, the aqueous solution has a viscosity of 10,000 mPa·s or less as measured at 25°C; and
   [2]: the protein material has a TCA solubilization rate of 30% to 95% in 0.22 M TCA.
(12) The method for improving heat resistance of a nanoemulsion-containing composition according to (11), wherein the nanoemulsion-containing composition is a nanoemulsion-containing food.

The present invention also provides the following aspects.
(1) A method for producing a nanoemulsion-containing composition, the method including all of the following [1] to [3]:
   [1]: providing an oil-in-water nanoemulsion having an emulsion particle size of 100 nm or less;
   [2]: diluting the oil-in-water nanoemulsion of [1], and preparing a nanoemulsion-containing composition satisfying the following requirements (A) and (B); and
   [3]: adding one or more selected from an enzymatically treated lecithin, an organic acid monoglyceride, and an ascorbic acid fatty acid ester to an aqueous phase of the oil-in-water nanoemulsion of [1] and/or an aqueous phase of the nanoemulsion-containing composition of [2] in an amount of 0.1 to 20 times the mass of an oil phase of the oil-in-water nanoemulsion of [1];
      (A): the nanoemulsion-containing composition contains 0.01 to 5 mass% of the oil-in-water nanoemulsion of [1] as an oil phase; and
      (B): the nanoemulsion-containing composition has an ionic strength of 0.02 to 5 mol/ L.
(2) The method for producing a nanoemulsion-containing composition according to (1), wherein the oil-in-water nanoemulsion to be diluted contains 1 to 35 mass% of the oil phase.
(3) The method for producing a nanoemulsion-containing composition according to (1), wherein the nanoemulsion contains a protein material having the following properties [1] and [2]:
   [1]: after an aqueous solution having a crude protein content of 20 mass% is heated at 80°C for 30 minutes, the aqueous solution has a viscosity of 10,000 mPa·s or less as measured at 25°C; and
   [2]: the protein material has a TCA solubilization rate of 30% to 95% in 0.22 M TCA.
(4) A method for producing a nanoemulsion-containing food, including further heat-sterilizing the nanoemulsion-containing composition according to any one of (1) to (3).
(5) A method for improving heat resistance of a nanoemulsion-containing composition, the method including adding one or more selected from an enzymatically treated lecithin, an organic acid monoglyceride, and an ascorbic acid fatty acid ester to an aqueous phase of a nanoemulsion-containing composition satisfying the following requirements (A) and (B) in an amount of 0.1 to 20 times the mass of an oil phase of an oil-in-water nanoemulsion of (A):
   (A): the nanoemulsion-containing composition contains 0.01 to 5 mass% of the oil-in-water nanoemulsion having an emulsion particle size of 100 nm or less as an oil phase; and
   (B): the nanoemulsion-containing composition has an ionic strength of 0.02 to 5 mol/ L.
(6) The method for improving heat resistance of a nanoemulsion-containing composition according to (5), wherein the improvement in heat resistance is with respect to heating for the purpose of sterilization.
(7) The method for improving heat resistance of a nanoemulsion-containing composition according to (5) or (6), wherein the oil-in-water nanoemulsion contains a protein material having the following properties [1] and [2]:
   [1]: after an aqueous solution having a crude protein content of 20 mass% is heated at 80°C for 30 minutes, the aqueous solution has a viscosity of 10,000 mPa·s or less as measured at 25°C; and
   [2]: the protein material has a TCA solubilization rate of 30% to 95% in 0.22 M TCA.
(8) The method for improving heat resistance of a nanoemulsion-containing composition according to (7), wherein the nanoemulsion-containing composition is a nanoemulsion-containing food.

### Advantageous Effects of Invention

According to the present invention, the heat resistance of the nanoemulsion-containing composition having an ionic strength of 0.02 to 5 mol/ L and containing 0.01 to 5 mass% of the oil-in-water nanoemulsion having an emulsion particle size of 100 nm or less as an oil phase can be improved. This enables heat sterilization, particularly retort treatment to be performed in the case of food, for example.

### Description of Embodiments

The present invention will be described in detail below.

### (Oil-in-Water Nanoemulsion)

An oil-in-water (O/W) nanoemulsion used in the present invention is a nanoemulsion in which an oil phase having an emulsion particle size of 100 nm or less is dispersed in an aqueous phase. When the emulsion particle size is too large, the superiority of the nanoemulsion is reduced, which is undesirable. The emulsion particle size is preferably 90 nm or less, more preferably 80 nm or less, and most preferably 70 nm or less.

The oil-in-water nanoemulsion preferably contains 1 to 35 mass%, more preferably 5 to 30 mass%, and most preferably 10 to 25 mass% of the oil phase. If the content is too low, the cost of the nanoemulsion increases. On the other hand, if the content is too high, the nanoemulsion may not be prepared, which is undesirable.

### (Nanoemulsion-Containing Composition)

A nanoemulsion-containing composition of the present invention is a nanoemulsion-containing composition containing 0.01 to 5 mass% of the oil-in-water nanoemulsion having an emulsion particle size of 100 nm or less as an oil phase. Preferably, the nanoemulsion-containing composition is a food using the oil-in-water nanoemulsion-containing composition. The food using the nanoemulsion-containing composition of the present invention is not particularly limited, and may be used as a beverage, a liquid food such as soup, a seasoning such as a sauce or dressing, a functional food, or the like, or as a raw material thereof.

### (Ionic Strength)

The nanoemulsion-containing composition of the present invention contains the above-described oil-in-water nanoemulsion and has an ionic strength of 0.02 to 5 mol/L. The ionic strength is preferably 0.05 to 4 mol/ L, and more preferably 0.1 to 3 mol/ L. The ionic strength is mainly attributable to salts incorporated. When the present invention is used for food applications, these salts are used for imparting palatability to food, supplementing nutritional components, and reducing microbial risk, for example. Examples of the salts include sodium chloride, and the salts are usually used in an amount of about 0.5 to 1.5 mass% based on a water-based food. The ionic strength under such a condition is 0.086 to 0.257 mol/L. In dressings and seasonings, 5 to 15 mass% of the salts may be incorporated.

### (pH)

The nanoemulsion-containing composition of the present invention has a pH of preferably 3 to 10, and more preferably 3.5 to 9.5. When the pH is within this range, high thermal stability can be exhibited.

### (Heat-Resistance-Improving Substance)

One or more selected from an enzymatically treated lecithin, an organic acid monoglyceride, and an ascorbic acid fatty acid ester can improve the heat resistance of the nanoemulsion-containing composition of the present invention. Among these, the enzymatically treated lecithin is most preferred.

The enzymatically treated lecithin used in the present invention is obtained by hydrolyzing one of the two fatty acid molecules bonded to glycerin with an enzyme, preferably phospholipase A1, A1, and B, for example. The enzymatically treated lecithin is also called lysolecithin.

The organic acid monoglyceride used in the present invention is a compound in which one molecule of an organic acid or a derivative thereof is ester-bonded to a monoacylglyceride. Examples thereof include succinic acid fatty acid monoglyceride, diacetyl tartaric acid fatty acid monoglyceride, and citric acid fatty acid monoglyceride. The ascorbic acid fatty acid ester is a compound in which a fatty acid is ester-bonded to ascorbic acid. Examples thereof include ascorbyl palmitate and ascorbyl stearate.

### (Emulsifier)

Various emulsifiers may be incorporated in the present invention. Herein, when referred to as an emulsifier, examples thereof include synthetic emulsifiers and natural emulsifiers. Specific examples thereof include synthetic emulsifiers such as monoacylglycerol, diacylglycerol, polyglycerin fatty acid ester, sucrose fatty acid ester, sodium stearoyl lactate, calcium stearoyl lactate, polyoxyethylene derivative, fatty acid salt, and processed starch, naturally occurring lecithins such as lecithin, hydrogenated lecithin, hydroxylecithin, phosphatidylglycerol, phosphatidic acid, and acetylated lecithin, derivatives of these lecithins, and naturally occurring saponins such as soybean saponin and quillaja saponin.

A protein material described later is particularly preferred as the emulsifier. Proteins that do not meet the requirements of this protein material, for example, milk casein and lactalbumin are also included in the emulsifier as long as the proteins have emulsifiability. For example, various emulsifiers, each soluble in any of the aqueous phase and the oil phase, may be added to the respective phases.

### (Protein material)

The protein material used in an aspect of the present invention needs to have a low viscosity after heating. The viscosity after heating can be measured by preparing an aqueous solution of a protein material having a crude protein content of 20 mass%, heating the aqueous solution at 80°C for 30 minutes, and then measuring the viscosity of the aqueous solution at 25°C. The viscosity after heating is 10,000 mPa·s or less, preferably 5,000 mPa·s or less, 1,000 mPa·s or less, and 500 mPa·s or less, and more preferably 200 mPa·s or less, and 100 mPa·s or less.

The present protein material is required to have a molecular weight of a certain size. The molecular weight is defined by the TCA solubilization rate. In the present invention, the TCA solubilization rate is defined by the ratio of the content of the crude protein dissolved in 0.22 M TCA to the total content of the crude protein. The TCA solubilization rate is from 30 to 95%, preferably from 35 to 90%, more preferably from 40 to 85% and from 50 to 80%. When the TCA solubilization rate is too low, the viscosity after heating tends to increase, which is undesirable, and the transmittance decreases. On the other hand, when the TCA solubilization rate is too high, the content of the protein contributing to the emulsifiability decreases, and a larger amount of the protein material is required to be incorporated. As a result, the flexibility in the incorporation is reduced, which is not preferable.

The present protein material preferably has a nitrogen solubility index (NSI) used as an index of protein solubility of 80 or more. More preferably, the protein material having an NSI of 85 or more, 90 or more, 95 or more, or 97 or more can be used. A high NSI of the protein material indicates high dispersibility in water and can contribute to the dispersion stability of the oil-in-water nanoemulsion and the nanoemulsion-containing composition according to the present invention. When the NSI is too low, precipitation more likely to occur, which is not preferred. The crude protein content in the protein material is also preferably 30 mass% or more, more preferably 50 mass% or more, and most preferably 70 mass% or more. The protein material having a higher crude protein content can exhibit the function in a smaller amount.

Examples of such protein material include "MIRA-MAP 2.0", available from Fuji Oil Co., Ltd.

### (Oily material)

The oil phase of the present invention is composed of an oily material. The oily material refers to a substance insoluble or poorly soluble in water and easily soluble in neutral lipids, as well as a lipid per se. That is, examples thereof include triglycerides such as soybean oil, rapeseed oil, corn oil, safflower oil, rice bran oil, cottonseed oil, sunflower oil, sesame oil, olive oil, peanut oil, palm oil, palm kernel oil, coconut oil, lard, beef tallow, fish oil, and medium-chain fatty acid oil; a product obtained by modifying these triglycerides by interesterification, hydrogenation, or the like; and fatty acids obtained by decomposing these triglycerides. Examples of the fatty acids also include polyunsaturated fatty acids (eicosapentaenoic acid, docosahexaenoic acid, arachidonic acid and γ-linolenic acid and/or ethyl esters, for example) and the like. In order to obtain finer emulsion particles, the oily material having a melting point of 40°C or less is preferable, a triglyceride having the same melting point is more preferable, and the medium-chain fatty acid oil (MCT) is most preferable. Although one of oil-soluble substances described below can be added for reasons such as imparting a physiological function, coloring, or flavoring, these substances have a boiling point higher than that of water. That is, flavoring agents obtained by mixing one or more selected from natural flavoring materials such as essential oils, extracts, oleoresin, recovered flavors, and isolated flavoring agents, and synthetic flavoring materials such as alcohols, esters, aldehydes, ketones, and lactones, colorants such as carotenoids and carotenoid derivatives (for example, α-carotene or β-carotene, 8'-apo-β-carotenal, 8'-apo-β-carotenoic acid ester), flavonoids, turmeric, annatto, an anthocyanin, and a tar dye, vitamin A, vitamin D, vitamin E, and vitamin K, coenzyme Q10, and derivatives thereof (vitamin A ester and vitamin E ester. Examples of an antioxidant include fat-soluble vitamins such as vitamin A acetate, vitamin A palmitate, and tocopherol acetate; and dibutylhydroxytoluene (BHT), butylhydroxyanisole (BHA), licorice oil extract, unsaponifiable matter of sesame oil, γ-oryzanol, rapeseed oil extract, and L-ascorbyl ester. However, the oily material is not limited thereto.

### (Method for Preparing Oil-in-Water Nanoemulsion)

A preparation method will be described below. First, an oil-in-water nanoemulsion having an emulsion particle size of 100 nm or less is prepared. The nanoemulsion may be prepared, for example, by mixing an oily material serving as an oil phase, water, an emulsifier, and, if necessary, another raw material, subjecting the mixture to preliminary emulsification, and applying a strong shear force.

The preliminary emulsification is to prepare an oil-in-water emulsion having a particle size of about from 10 to 100 µm by treatment with a homomixer, for example. Although the rotation speed varies depending on the device, for example, in the case of HOMOGENIZING MIXER MARK II Model 2.5 made by PRIMIX Corporation, the treatment may be carried out at 8,000 rpm for about 10 minutes.

Subsequently, main emulsification is performed. Although the emulsification is not particularly limited, an emulsification apparatus having a high shear force is preferable, and examples thereof include a homomixer, a colloid mill, a high-pressure homogenizer, an ultrahigh pressure homogenizer, and a vacuum emulsifier. Specifically, an APV Gaulin homogenizer (made by APV), a microfluidizer (made by Microfluidics International Corp.), an ultimizer (made by Sugino Machine Limited), a nanomizer (made by DAIWA CAN COMPANY) or the like may be preferably used.

It is preferable to perform the emulsification at a pressure of 10 MPa or more using these high pressure emulsifying devices. In an example using the microfluidizer, it is effective to perform shearing treatment twice or more, preferably four times or more, and more preferably ten times or more, at the pressure of preferably 10 MPa or more, and more preferably 30 MPa or more.

In place of the above homogenization treatment machine, for example, a homogenization treatment machine such as an ultrasonic emulsifier may be used. Examples thereof include an ultrasonic homogenizer US-600, an ultrasonic homogenizer US-1200T, an ultrasonic homogenizer RUS-1200T, and an ultrasonic homogenizer MUS-1200T (all made by NIHONSEIKI KAISHA LTD.), and an ultrasonic processor UIP-2000, an ultrasonic processor UIP-4000, an ultrasonic processor UIP-8000, and an ultrasonic processor UIP-16000 (all made by Hielscher GmbH). These high-power ultrasonic irradiators are used at a frequency of 25 kHz or less, and preferably from 15 to 20 kHz.

The oil-in-water nanoemulsion prepared in this process preferably contains 1 to 35 mass% of an oil phase having an emulsion particle size of 100 nm or less.

### (Nanoemulsion-Containing Composition)

A nanoemulsion-containing composition is prepared by diluting the oil-in-water nanoemulsion used as a raw material, adding a salt if necessary, and adjusting the ionic strength to 0.02 to 5 mol/ L. In this case, the oil phase serving as the oil-in-water nanoemulsion having an emulsion particle size of 100 nm or less is contained in the nanoemulsion-containing composition in an amount of 0.01 to 5 mass%. The content is preferably 0.02 to 1 mass%, more preferably 0.04 to 0.5 mass%, and most preferably 0.06 to 0.2 mass%. If the content is too low, the cost associated with consumption of the nanoemulsion increases, whereas if the content is too high, the flavor of the water-based food may deteriorate.

### (Incorporation of Heat-Resistance-Improving Substance)

In the preparation of the nanoemulsion-containing composition of the present invention, a heat-resistance-improving substance, that is, one or more selected from an enzymatically treated lecithin, an organic acid monoglyceride, and an ascorbic acid fatty acid ester is incorporated to the aqueous phase of the oil-in-water nanoemulsion and/or the nanoemulsion-containing composition. More preferably, the nanoemulsion-containing composition is prepared by diluting the oil-in-water nanoemulsion with water or an aqueous solution containing the heat-resistance-improving substance, or by adding the heat-resistance-improving substance after dilution.

For example, the nanoemulsion-containing composition is prepared by dissolving or dispersing the heat-resistance-improving substance in water or an aqueous composition, and then adding the oil-in-water nanoemulsion.

The heat-resistance-improving substance is added in an amount of 0.1 to 20 times the mass of the oil phase of the oil-in-water nanoemulsion. The heat-resistance-improving substance is added in an amount of preferably 0.2 to 6 times, and most preferably 0.6 to 4 times the mass of the oil phase. If the content is too low, there may not be provided an emulsion composition having excellent emulsion stability under high-temperature heating such as retort sterilization, in an aqueous solution with a high ionic strength. If the content is too high, the flavor of the food may deteriorate, which is not preferred.

### (Other Components)

Various substances can be added to the nanoemulsion-containing composition of the present invention, as long as the addition does not adversely affect the composition, and examples thereof are shown below.

Examples thereof include sugars, nutritional components (such as amino acids, vitamins, and minerals), alcoholic beverages, salts, taste components (including salty taste and umami taste), fruit juice (including concentrate), fruit flesh, vegetables, vegetable juice (including concentrate), purees, extract, sweeteners, high-intensity sweeteners (such as sucralose, acesulfame K, aspartame, neotame, saccharin, sodium saccharin, thaumatin, stevia, glycyrrhizin, monellin, alitame, and disodium glycyrrhizinate), bittering agents (such as iso-α-acid, Rho-hop, Hexahop, and Tetrahop), acidulants, colorants (such as safflower yellow, caramel color, gardenia pigment, fruit juice colorants, vegetable colorants, and synthetic colorants), food additives (such as dietary fibers, excipients, pH adjusters, preservatives, antioxidants (such as vitamin C, vitamin E, and extracted tocopherols), thickeners, stabilizers, and gelling agents), and active ingredients or additives of pharmaceuticals, quasi-drugs, or cosmetics.

### (Heating)

The present invention relates to a nanoemulsion-containing composition having improved heat resistance. This heat resistance mainly refers to resistance to heat applied for sterilization when used for food applications. The present invention is also effective for processing involving the same heat history even in applications other than the sterilization.

In general, water-based foods are distributed in the market after being filled in containers and then sterilized, or after being filled in containers after sterilization. When the nanoemulsion-containing composition of the present invention is used as a food, the nanoemulsion in the water-based food containing the composition can be maintained even after sterilization.

The sterilization can be performed by appropriately selecting from various methods known for sterilizing food and/or beverage. Examples of the known sterilization methods include retort sterilization, low-temperature long-time (LTLT) sterilization, high-temperature short-time (HTST) sterilization, ultra-high-temperature (UHT) sterilization, steam infusion, steam injection, and Joule sterilization.

The sterilization temperature is generally 80°C or higher and lower than 130°C, but from the viewpoint of flavor, the lower limit of the sterilization temperature is preferably 85°C or higher, and particularly preferably 90°C or higher. On the other hand, the upper limit is preferably 130°C or lower, and particularly preferably 120°C or lower.

In addition, when distribution at room temperature is assumed, the F-value (see Handbook of Antibacterial and Antifungal technology, edited by the Society for Antibacterial and Antifungal Agents, Japan, p. 642, Gihodo Shuppan) is preferably 4 or more, more preferably 10 or more, and particularly preferably 30 or more. This F value specifies the sterilization temperature for retort foods, where 121°C (250°F) for 1 minute is defined as an F value of 1. By performing the sterilization under such conditions, the risk of microbial contamination can be sufficiently reduced.

An embodiment of the present invention is a pressurized, heat-sterilized packaged food having an ionic strength of 0.02 to 5 mol/L. Pressurized, heat-sterilized packaged foods having a pH greater than 4.6 and a water activity greater than 0.94 are required to be sterilized by heating the central portion to 120°C for 4 minutes, or under the condition that achieves an equivalent to or greater than this heating. The present invention is suitable for the pressurized, heat-sterilized packaged foods that contain an oil-in-water nanoemulsion having an emulsion particle size of 100 nm or less. Examples of the pressurized, heat-sterilized packaged food include tomato sauces, soups, jams, oyster sauces, canned foods, curries, stews, and spaghetti sauces.

### (Particle size)

The nanoemulsion-containing composition of the present invention has an emulsion particle size of 100 nm or less. The nanoemulsion-containing composition of the present invention has an emulsion particle size of preferably 90 nm or less, more preferably 80 nm or less, and most preferably 70 nm or less. A feature of the present invention is that the particle size is maintained even after heat sterilization.

The nanoemulsion-containing composition of the present invention and its raw materials are evaluated by the following procedures.

### <Crude protein content>

The crude protein content is measured by the Kjeldahl method. Specifically, the mass of nitrogen measured by the Kjeldahl method is represented by "mass%" as the crude protein content of a dried product, with respect to the weight of the protein material. The nitrogen conversion coefficient is 6.25. Basically, the value is obtained by rounding off the numerical value to the first decimal place.

### <NSI>

To 3 g of a sample, 60 mL of water is added, followed by propeller stirring at 37°C for 1 hour and centrifugation at 1400 × g for 10 minutes to collect a supernatant (I). Subsequently, 100 mL of water is added again to the remaining precipitate, and the mixture is again subjected to the propeller stirring at 37°C for 1 hour, followed by centrifugation to collect a supernatant (II). The supernatants (I) and (II) are combined, and water is added to the mixture to make a total volume of 250 mL. After the mixture is filtered through a filter paper (No. 5), the nitrogen content of the filtrate is measured by the Kjeldahl method. At the same time, the nitrogen content of the sample is measured by the Kjeldahl method, and the ratio of the amount of nitrogen recovered in the filtrate (water-soluble nitrogen) to the total amount of nitrogen in the sample is expressed in mass% and the expressed mass% is defined as the NSI. Basically, the value is obtained by rounding off the value to the first decimal place.

### <TCA solubilization rate>

A TCA solubilization rate is determined by adding an equal volume of 0.44 M trichloroacetic acid (TCA) to a 2 mass% aqueous solution of a protein material to yield a 0.22 M TCA solution, and measuring the ratio of the soluble nitrogen by the Kjeldahl method. Basically, the value is obtained by rounding off the numerical value to the first decimal place.

### <Viscosity (viscosity after heating)>

The viscosity of the protein material is measured using a B-type viscometer (Type BM, available from Toki Sangyo Co., Ltd). An aqueous solution of the protein material having a crude protein content of 20 mass% is prepared and placed in a measurement container. After setting a rotor and sealing the container, the container is heated at 80°C for 30 minutes in a hot water bath. Next, the viscosity is measured at 25°C at any rotation speed, the indicated value is read, and the viscosity is calculated by multiplying the read value by the conversion factor corresponding to the rotor number and the rotation speed. (Unit: Pa·s) The measurement value is set as the value after 1 minute. Basically, the rotation speed is set to 60 rpm. For samples with high viscosity, the rotor is changed from No. 1 to No. 4, and the rotation speed is reduced to 6 rpm. The upper limit of measurable viscosity in this measurement is 100,000 mPa·s. If the measurement range is exceeded in the rotor No. 4 at a rotation speed of 6 rpm, the viscosity after heating is immediately determined to be 100,000 mPa·s or higher.

### Examples

Hereinafter, the present invention will be described in more detail with reference to Examples, but the spirit of the present invention is not limited to these Examples at all. In Examples, the description of "part(s)" and "%" is on a mass basis.

### <Raw Materials>

The raw materials used in Examples and Comparative Examples are as described below. The symbol *) indicates a heat-resistance-improving substance, i.e., any one of an enzymatically treated lecithin, an organic acid monoglyceride, or an ascorbic acid fatty acid ester.
1) Oil and/or fat: palm olein, product name "Palm Ace N", available from Fuji Oil Co., Ltd.
2) Hydrophilic emulsifier A: pentaglycerin monooleate: product name "Sunsoft A-171E", available from Taiyo Kagaku Co., Ltd., HLB: about 13
3) Hydrophilic emulsifier B: sucrose stearate: product name "RYOTO Sugar Ester S-1670", available from Mitsubishi Chemical Corporation, HLB: about 16
4) Soybean protein material A: product name "MIRA-MAP 2.0", available from Fuji Oil Co., Ltd., crude protein content: 79.3%, TCA solubilization rate: 61.8%, viscosity after heating: 28 mPa·s, NSI: 98.1
5) Sodium hydroxide: product name "Sodium Hydroxide", available from KISHIDA CHEMICAL CO., LTD.
6) Glycerin: product name "Glycerin (food additive)", available from KISHIDA CHEMICAL CO., LTD.
7) Sodium chloride: product name "Sodium Chloride", available from FUJIFILM Wako Pure Chemical Corporation
8) Enzymatically decomposed lecithin A: product name "SLP-LPC70", available from Tsuji Oil Mills Co., Ltd. *)
9) Enzymatically decomposed lecithin B: product name "Sun Lecithin S", available from Taiyo Kagaku Co., Ltd. *)
10) Enzymatically decomposed lecithin C: product name "SLP-White Lyzo", available from Tsuji Oil Mills co.,Ltd. *)
11) Succinic acid fatty acid monoglyceride: product name "Poem B-30", available from Riken Vitamin Co., Ltd. *)
12) Diacetyl tartaric acid fatty acid monoglyceride: product name "Poem W-60", available from Riken Vitamin Co., Ltd. *)
13) Citric acid fatty acid monoglyceride: product name "Poem K-37V", available from Riken Vitamin Co., Ltd. *)
14) Ascorbyl palmitate: product name "L-ascorbyl palmitate", available from DSM *)
15) Lecithin: product name "SLP-white", available from Tsuji Oil Mills co.,Ltd.
16) Soybean peptide: product name "Hinute-AM", available from Fuji Oil Co., Ltd., crude protein content: 90.0%, TCA solubilization rate: 100.0%, viscosity after heating: 20 mPa·s, NSI: 100)
17) Soy protein: product name "FUJIPRO R", available from Fuji Oil Co., Ltd., crude protein content: 87.2%, TCA solubilization rate: 3.2%, viscosity after heating: 100,000 mPa·s or more, NSI: 81.2
18) Sodium caseinate: product name "Sodium Caseinate 180", available from Fonterra Co-operative Group Limited, crude protein content: 92.3%, TCA solubilization rate: 0.0%, viscosity after heating: 100,000 mPa·s or more, NSI: 98.1
23) Sucrose: product name "Sucrose", available from KISHIDA CHEMICAL CO., LTD.
24) Glucose: product name "D (+)-glucose", available from FUJIFILM Wako Pure Chemical Corporation
25) Fructose: product name "D (-)-Fructose", available from KISHIDA CHEMICAL CO., LTD.
26) Xylose: product name "D(+)-Xylose", available from KISHIDA CHEMICAL CO., LTD.
27) Trehalose: product name "TREHA", available from Nagase Viita Co., Ltd.
28) Water-soluble soybean polysaccharide: product name "Soyafibe-S-DA 100", available from Fuji Oil Co., Ltd.
29) Gum arabic: product name "SuperStab AA", available from Nexira
30) Soybean saponin: product name "Soy Health SA", available from Fuji Oil Co., Ltd.
31) Quillaja saponin: product name "Quillajanin C-100", available from Maruzen Pharmaceuticals Co., Ltd.
32) Soybean isoflavone: product name "Soyaflavone HG", available from Fuji Oil Co., Ltd.
33) L-ascorbic acid: product name "L(+)-ascorbic acid", available from FUJIFILM Wako Pure Chemical Corporation
34) Citric acid: product name "Citric acid [anhydrous]", available from KISHIDA CHEMICAL CO., LTD.
35) Malic acid: product name "DL-Malic acid", available from KISHIDA CHEMICAL CO., LTD.
36) Disodium succinate: product name "di-Sodium succinate,6-hydrate", available from KISHIDA CHEMICAL CO., LTD.
37) Tartaric acid: product name "DL-Tartaric acid", available from KISHIDA CHEMICAL CO., LTD.
38) Sodium oleate: product name "Sodium Oleate", available from Tokyo Chemical Industry Co., Ltd.
39) Polyoxyethylene sorbitan monolaurate: product name "Tween 20", available from Tokyo Chemical Industry Co., Ltd.
40) Polyoxyethylene sorbitan monostearate: product name "Tween 60", available from Tokyo Chemical Industry Co., Ltd.
41) Polyoxyethylene sorbitan monooleate: product name "Tween 80", available from Tokyo Chemical Industry Co., Ltd.
42) Potassium dihydrogen phosphate: product name "Potassium Dihydrogen Phosphate", available from FUJIFILM Wako Pure Chemical Corporation
43) Disodium hydrogen phosphate: product name "Disodium Hydrogen Phosphate", available from FUJIFILM Wako Pure Chemical Corporation
44) Sodium acetate: product name "Sodium Acetate", available from FUJIFILM Wako Pure Chemical Corporation
45) Sodium alginate: product name "Sodium Alginate 80 to 120", available from FUJIFILM Wako Pure Chemical Corporation
46) Aspartic acid: product name "L-Aspartic Acid", available from Tokyo Chemical Industry Co., Ltd.
47) Glutamic acid: product name "L-Glutamic Acid", available from Tokyo Chemical Industry Co., Ltd.
48) Lysine: product name "L-lysine", available from Tokyo Chemical Industry Co., Ltd.
49) Arginine: product name "L-Arginine", available from Tokyo Chemical Industry Co., Ltd.
50) Histidine: product name "L-Histidine", available from Tokyo Chemical Industry Co., Ltd.
51) Serine: product name "L-Serine", available from Tokyo Chemical Industry Co., Ltd.
52) Threonine: product name "L-Threonine", available from Tokyo Chemical Industry Co., Ltd.
53) Cysteine: product name "L-Cysteine", available from Tokyo Chemical Industry Co., Ltd.
54) Asparagine: product name "L-Asparagine", available from Tokyo Chemical Industry Co., Ltd.
55) Glutamine: product name "L-Glutamine", available from Tokyo Chemical Industry Co., Ltd.
56) Tyrosine: product name "L-Tyrosine", available from Tokyo Chemical Industry Co., Ltd.
57) Glycine: product name "L-Glycine", available from Tokyo Chemical Industry Co., Ltd.
58) Alanine: product name "L-Alanine", available from Tokyo Chemical Industry Co., Ltd.
59) Proline: product name "L-Proline", available from Tokyo Chemical Industry Co., Ltd.
60) Valine: product name "L-Valine", available from Tokyo Chemical Industry Co., Ltd.
61) Leucine: product name "L-Leucine", available from Tokyo Chemical Industry Co., Ltd.
62) Isoleucine: product name "L-Isoleucine", available from Tokyo Chemical Industry Co., Ltd.
63) Methionine: product name "L-Methionine", available from Tokyo Chemical Industry Co., Ltd.
64) Phenylalanine: product name "L-Phenylalanine", available from Tokyo Chemical Industry Co., Ltd.
65) Tryptophan: product name "L-Tryptophan", available from Tokyo Chemical Industry Co., Ltd.
66) Trisodium citrate: product name "tri-Sodium citrate,2-hydrate", available from KISHIDA CHEMICAL CO., LTD.
67) Citric acid: product name "Citric Acid", available from KISHIDA CHEMICAL CO., LTD.
68) Bouillon (western-style soup stock): product name "Maggi Bouillon", available from Nestle Japan Ltd., sodium chloride equivalent 58 g/ 100 g. Raw materials: salt (produced in Japan), dextrin, yeast extract, sugar, onion, spices
69) Soup base (for dilution): Product name "Triple-Concentrated Tsuyu," available from Yamaki Co., Ltd.; sodium chloride equivalent: 11 g/100 g. Raw materials: soy sauce (containing wheat and soybeans), high-fructose corn syrup, salt, sugar, protein hydrolysate, dried fish flakes (bonito, round herring, frigate mackerel), brewed vinegar, bonito extract, dried sardine, kelp extract, yeast extract/ seasoning (such as amino acids), caramel color

### (Measurement of emulsion particle size)

As a sample, the oil-in-water nanoemulsion or the nanoemulsion-containing composition was diluted with ion-exchanged water until the oil phase content reaches 0.02 mass%. The particle size of the oil droplets in water was measured as the Z-average (nm), calculated using a Zetasizer Nano-ZS (MODEL ZEN3600, available from Malvern Panalytical Ltd.). The measurement was performed three times at 25°C using 2 g of the sample in a glass cell with a 1-cm optical path. The average of the three measurements was taken as the average emulsion particle size. The setting conditions were as follows.

RI (Material) 1.47, Absorption (Material) 0, Temperature (Dispersant) 25 (°C), Viscosity (Dispersant) 0.887 (cp), RI (Dispersant) 1.33, Equilobration time 60 (sec), Number of runs 10, Run duration 10, Number of measurements 1, Dela between measurements 0 (sec).

### (Preparation of Oil-in-Water Nanoemulsion)

A plurality of oil-in-water nanoemulsions were prepared as described below according to Table 1. That is:
a) Preparation of oil phase: one or a plurality of materials corresponding to the respective formulations of oil phases shown in Table 1 were mixed and set to 80°C. The oil phases were prepared by mixing the one or a plurality of materials for 5 minutes using a homomixer (HOMOGENIZING MIXER MARK II, Model 2.5, available from PRIMIX Corporation).
b) Preparation of aqueous phase: Materials corresponding to the respective formulations of aqueous phases shown in Table 1 were dissolved in water at 80°C. The aqueous phases were prepared by mixing the materials for 5 minutes using the homomixer.
c) Each of the oil phases prepared in step a) was added to each of the aqueous phases of step b), and the respective mixtures were preliminarily emulsified at 80°C for 5 minutes to have an emulsion particle size of from 10 to 60 µm using the homomixer.
d) Oil-in-water nanoemulsions A1 to A5 and B were prepared by treating each of the mixtures of step c) five times with a high pressure homogenizer (Microfluidizer, available from Microfluidics International Corporation) at a pressure of 150 MPa.

The oil-in-water nanoemulsions A2 and A4 were prepared by incorporating an enzymatically decomposed lecithin, which is the heat -resistance-improving material, to each of the oil phases. The oil-in-water nanoemulsions A3 and A5 were prepared by incorporating the same substance to each of the aqueous phases.

**(Table 1) Preparation of Oil-in-Water Nanoemulsion**

| O/W Nanoemulsion (mass%) | | A1 | A2 | A3 | A4 | A5 | B |
|---|---|---|---|---|---|---|---|
| Oil Phase | Oil and/or fat | 20 | 20 | 20 | 20 | 20 | 20 |
| | Enzymatically decomposed lecithin A^{*)} | | 1.5 | | 4 | | |
| Phase | Enzymatically decomposed lecithin A^{*)} | | | 1.5 | | 4 | |
| | Hydrophilic emulsifier A | 8.4 | 7 | 7 | 3.5 | 7 | |
| | Aqueous Hydrophilic emulsifier B | 3.6 | 3 | 3 | 1.5 | 3 | |
| | Soybean protein material A | | | | | | 12 |
| | Glycerin | 38 | 38.5 | 38.5 | 41 | 36 | 48 |
| | Water | q.s. | q.s. | q.s. | q.s. | q.s. | q.s. |
| | Total | 100 | 100 | 100 | 100 | 100 | 100 |
| | Emulsion particle size (nm) | 64.5 | 63.4 | 64.8 | 74.2 | 73.2 | 68.1 |

| | | | | | | | |
|---|---|---|---|---|---|---|---|
| ^{*)} is a heat-resistance-improving substance | | | | | | | |

### (Study on Improvement in Heat Resistance Using Oil-in-Water Nanoemulsion A1)

Water-based foods, which were nanoemulsion-containing compositions, were prepared using the oil-in-water nanoemulsion A1 according to the formulation shown in Table 2. Subsequently, each of the compositions was filled in a retort container, and sterilized at 121°C for 30 minutes (F value: 33) by a retort sterilizer, and then the emulsion particle size was measured.

Evaluation criteria includes:
4 points: very good, with a particle size of 70 nm or less.
3 points: good, with a particle size of 80 nm or less.
2 points: moderately good, with a particle size of 90 nm or less.
1 point: acceptable, with a particle size of 100 nm or less.
0 point: poor, where the particle size exceeds 100 nm.

The results are summarized in Table 2.

**(Table 2) Study on Improvement in Heat Resistance of Emulsion A1 (121°C, 30 minutes)**

| | Nanoemulsion-containing composition (mass%) | | | | | | | | Parameters | | | Results | |
|---|---|---|---|---|---|---|---|---|---|---|---|---|---|
| | O/W nanoemulsion A1 | | Enzymatically decomposed lecithin A^{*)} | Sodium chloride | Trisodium citrate | Citric acid | Water | Total | Ratio of substance X^{*)} to oil phase (mass ratio) | Ionic strength (mol/L) | pH | Emulsion particle size (nm) | Evaluation |
| Comparative Example | 1 | 0.5 | | 0.25 | | | q.s. | 100 | 0.0 | 0.043 | 7.0 | 120 | 0 |
| Comparative Example | 2 | 0.5 | | 0.50 | | | q.s. | 100 | 0.0 | 0.086 | 7.0 | 116 | 0 |
| Comparative Example | 3 | 0.5 | | 1.0 | | | q.s. | 100 | 0.0 | 0.171 | 7.0 | 124 | 0 |
| Comparative Example | 4 | 0.5 | | 2.0 | | | q.s. | 100 | 0.0 | 0.342 | 7.0 | 116 | 0 |
| Comparative Example | 5 | 0.5 | | 5.0 | | | q.s. | 100 | 0.0 | 0.856 | 7.0 | 117 | 0 |
| Comparative Example | 6 | 0.5 | | 15.0 | | | q.s. | 100 | 0.0 | 2.567 | 7.0 | 168 | 0 |
| Comparative Example | 7 | 0.5 | | 20.0 | | | q.s. | 100 | 0.0 | 3.422 | 7.0 | 332 | 0 |
| Example | 1 | 0.5 | 0.07 | 0.25 | | | q.s. | 100 | 0.7 | 0.043 | 7.0 | 63 | 4 |
| Example | 2 | 0.5 | 0.07 | 0.50 | | | q.s. | 100 | 0.7 | 0.086 | 7.0 | 66 | 4 |
| Example | 3 | 0.5 | 0.07 | 1.0 | | | q.s. | 100 | 0.7 | 0.171 | 7.0 | 67 | 4 |
| Example | 4 | 0.5 | 0.07 | 2.0 | | | q.s. | 100 | 0.7 | 0.342 | 7.0 | 68 | 4 |
| Example | 5 | 0.5 | 0.07 | 5.0 | | | q.s. | 100 | 0.7 | 0.856 | 7.0 | 76 | 3 |
| Example | 6 | 0.5 | 0.07 | 15.0 | | | q.s. | 100 | 0.7 | 2.567 | 7.0 | 80 | 3 |
| Example | 7 | 0.5 | 0.07 | 20.0 | | | q.s. | 100 | 0.7 | 3.422 | 7.0 | 98 | 1 |
| Example | 8 | 0.5 | 0.01 | 1.0 | | | q.s. | 100 | 0.1 | 0.171 | 7.0 | 98 | 1 |
| Example | 9 | 0.5 | 0.02 | 1.0 | | | q.s. | 100 | 0.2 | 0.171 | 7.0 | 75 | 3 |
| Example | 10 | 0.5 | 0.05 | 1.0 | | | q.s. | 100 | 0.5 | 0.171 | 7.0 | 72 | 3 |
| Example | 11 | 0.5 | 0.07 | 1.0 | | | q.s. | 100 | 0.7 | 0.171 | 7.0 | 69 | 4 |
| Example | 12 | 0.5 | 0.10 | 1.0 | | | q.s. | 100 | 1.0 | 0.171 | 7.0 | 70 | 3 |
| Example | 13 | 0.5 | 0.30 | 1.0 | | | q.s. | 100 | 3.0 | 0.171 | 7.0 | 77 | 3 |
| Example | 14 | 0.5 | 0.07 | 1.0 | 1.50 | 0.90 | q.s. | 100 | 0.7 | 0.324 | 4.5 | 77 | 3 |
| Example | 15 | 0.5 | 0.07 | 1.0 | 1.73 | 0.73 | q.s. | 100 | 0.7 | 0.348 | 5.5 | 73 | 3 |
| Example | 16 | 0.5 | 0.07 | 1.0 | 2.32 | 0.38 | q.s. | 100 | 0.7 | 0.408 | 7.0 | 76 | 3 |
| Example | 17 | 0.5 | 0.07 | 1.0 | 2.9 | 0.00 | g.s. | 100 | 0.7 | 0.467 | 9.0 | 76 | 3 |

| | | | | | | | | | | | | | |
|---|---|---|---|---|---|---|---|---|---|---|---|---|---|
| ^{*)} is a heat-resistance-improving substance (substance X: enzymatically treated lecithin, organic acid monoglyceride, ascorbic acid fatty acid ester) | | | | | | | | | | | | | |

As is apparent from Examples and Comparative Examples in Table 2, incorporation of a certain amount of the enzymatically treated lecithin A, which is the heat-resistance-improving substance, suppressed the increase in the emulsion particle size of the nanoemulsion due to sterilization over a wide range of salt concentrations, where the ionic strength was 0.043 to 3.422 mol/L. In addition, the nanoemulsion-containing compositions stable over a wide pH range of 4.5 to 9, were successfully obtained.

### (Study on Improvement in Heat Resistance Using Oil-in-Water Nanoemulsion B)

Nanoemulsion-containing compositions were prepared using the oil-in-water nanoemulsion B according to the formulation shown in Table 3. Subsequently, each of the compositions was filled in a retort container and sterilized at 121°C for 30 minutes (F value: 33) by a retort sterilizer. Next, the emulsion particle size was measured and evaluated in the same manner. The results are summarized in Table 3.

**(Table 3) Study on Improvement in Heat Resistance of Emulsion B (121°C, 30 minutes)**

| | Nanoemulsion-containing composition (mass%) | | | | | | | | Parameters | | | Results | |
|---|---|---|---|---|---|---|---|---|---|---|---|---|---|
| | O/W nanoemulsion B | | Enzymatically decomposed lecithin A^{*)} | Sodium chloride | Trisodium citrate | Citric, acid | Water | Total | Ratio of substance X^{*)} to oil phase (mass ratio) | Ionic strength (mol/L) | pH | Emulsion particle size (nm) | Evaluation |
| Comparative Example | 8 | 0.5 | | 0.25 | | | q.s. | 100 | 0.0 | 0.043 | 7.0 | 401 | 0 |
| Comparative Example | 9 | 0.5 | | 0.50 | | | q.s. | 100 | 0.0 | 0.086 | 7.0 | 446 | 0 |
| Comparative Example | 10 | 0.5 | | 1.0 | | | q.s. | 100 | 0.0 | 0.171 | 7.0 | 423 | 0 |
| Comparative Example | 11 | 0.5 | | 2.0 | | | q.s. | 100 | 0.0 | 0.342 | 7.0 | 462 | 0 |
| Comparative Example | 12 | 0.5 | | 5.0 | | | q.s. | 100 | 0.0 | 0.856 | 7.0 | 460 | 0 |
| Comparative Example | 13 | 0.5 | | 15.0 | | | q.s. | 100 | 0.0 | 2.567 | 7.0 | 386 | 0 |
| Comparative Example | 14 | 0.5 | | 20.0 | | | q.s. | 100 | 0.0 | 3.422 | 7.0 | 382 | 0 |
| Example | 18 | 0.5 | 0.20 | 0.25 | | | q.s. | 100 | 2.0 | 0.043 | 7.0 | 67 | 4 |
| Example | 19 | 0.5 | 0.20 | 0.50 | | | q.s. | 100 | 2.0 | 0.086 | 7.0 | 68 | 4 |
| Example | 20 | 0.5 | 0.20 | 1.0 | | | q.s. | 100 | 2.0 | 0.171 | 7.0 | 69 | 4 |
| Example | 21 | 0.5 | 0.20 | 2.0 | | | q.s. | 100 | 2.0 | 0.342 | 7.0 | 70 | 3 |
| Example | 22 | 0.5 | 0.20 | 10.0 | | | q.s. | 100 | 2.0 | 1.711 | 7.0 | 70 | 3 |
| Example | 23 | 0.5 | 0.20 | 15.0 | | | q.s. | 100 | 2.0 | 2.567 | 7.0 | 69 | 4 |
| Example | 24 | 0.5 | 0.20 | 20.0 | | | q.s. | 100 | 2.0 | 3.422 | 7.0 | 73 | 3 |
| Example | 25 | 0.5 | 0.03 | 1.0 | | | q.s. | 100 | 0.3 | 0.171 | 7.0 | 79 | 3 |
| Example | 26 | 0.5 | 0.05 | 1.0 | | | q.s. | 100 | 0.5 | 0.171 | 7.0 | 72 | 3 |
| Example | 27 | 0.5 | 0.07 | 1.0 | | | q.s. | 100 | 0.7 | 0.171 | 7.0 | 69 | 4 |
| Example | 28 | 0.5 | 0.30 | 1.0 | | | q.s. | 100 | 3.0 | 0.171 | 7.0 | 69 | 4 |
| Example | 29 | 0.5 | 0.60 | 1.0 | | | q.s. | 100 | 6.0 | 0.171 | 7.0 | 70 | 3 |
| Example | 30 | 0.5 | 1.00 | 1.0 | | | q.s. | 100 | 10.0 | 0.171 | 7.0 | 77 | 3 |
| Example | 31 | 0.5 | 0.07 | 1.0 | 1.50 | 0.90 | q.s. | 100 | 0.7 | 0.324 | 4.5 | 69 | 4 |
| Example | 32 | 0.5 | 0.07 | 1.0 | 1.89 | 0.62 | q.s. | 100 | 0.7 | 0.363 | 6.0 | 65 | 4 |
| Example | 33 | 0.5 | 0.07 | 1.0 | 2.32 | 0.38 | q.s. | 100 | 0.7 | 0.408 | 7.0 | 68 | 4 |
| Example | 34 | 0.5 | 0.07 | 1.0 | 2.90 | 0.00 | q.s. | 100 | 0.7 | 0.467 | 9.0 | 63 | 4 |
| Comparative Example | 15 | 5.0 | 0.07 | 1.0 | | | q.s. | 100 | 0.1 | 0.171 | 7.0 | 204 | 0 |
| Example | 35 | 5.0 | 0.70 | 1.0 | | | g.s. | 100 | 0.7 | 0.171 | 7.0 | 71 | 3 |

| | | | | | | | | | | | | | |
|---|---|---|---|---|---|---|---|---|---|---|---|---|---|
| ^{*)} is a heat-resistance-improving substance (substance X: enzymatically treated lecithin, organic acid monoglyceride, ascorbic acid fatty acid ester) | | | | | | | | | | | | | |

As is apparent from Examples and Comparative Examples in Table 3, incorporation of a certain amount of the enzymatically treated lecithin A, which is the heat-resistance-improving substance, suppressed the increase in the emulsion particle size of the nanoemulsion due to sterilization over a wide range of salt concentrations, where the ionic strength was 0.043 to 3.422 mol/L. In addition, the nanoemulsion-containing compositions stable over a wide pH range of 4.5 to 9, were successfully obtained. Furthermore, even in a nanoemulsion-containing composition containing as much as 1 mass% of lipid (corresponding to 5 mass% of an O/W nanoemulsion containing 20 mass% of an oil phase), the increase in the emulsion particle size of the nanoemulsion due to sterilization was successfully suppressed by adding the heat-resistance-improving substance in an amount of 0.7 times the amount of the oil phase.

In view of the above, in a case of nanoemulsion-containing compositions using the oil-in-water nanoemulsion, a nanoemulsion-containing composition having excellent stability which can maintain an emulsified state even in an aqueous solution with a high ionic strength and even after high-temperature heat treatment such as retort sterilization was successfully obtained by adding a certain amount of the heat-resistance-improving substance during the preparation of the nanoemulsion-containing composition using the oil-in-water nanoemulsion.

### (Study on phase to which heat-resistance-improving substance is added)

Nanoemulsion-containing compositions were prepared using the oil-in-water nanoemulsions A1 to A5 according to the formulations shown in Table 4. Subsequently, each of the compositions was filled in a retort container and sterilized at 121°C for 30 minutes (F value: 33) by a retort sterilizer. Next, the emulsion particle size was measured and evaluated in the same manner. The results are summarized in Table 4.

**(Table 4) Study on phase to which substance X is added**

| | | Formulation of Nanoemulsion-containing composition (mass%) | | | | | | | | | Phase to which substance X^{*)} was added (mass%) | | | | Parameters | | | Results | |
|---|---|---|---|---|---|---|---|---|---|---|---|---|---|---|---|---|---|---|---|
| | | O/W nanoemulsion | | | | | Diluted aqueous phase | | | Total | Oil phase of O/W nanoemulsion | Aqueous phase of O/W nanoemulsion | Diluted aqueous phase | Total in nanoemulsion composition | Ratio of substance X^{*)} to oil phase (mass ratio) | Ionic strength (mol/L) | pH | Emulsion particle size (nm) | Evaluation |
| | | A1 | A2 | A3 | A4 | A5 | Enzymatically decomposed lecithin A^{*)} | Sodium chloride | Water | | | | | | | | | | |
| Example | 36 | 0.5 | | | | | 0.020 | 1.0 | q.s. | 100 | | | 0.020 | 0.0200 | 0.20 | 0.171 | 7.0 | 75 | 3 |
| Example | 37 | | 0.5 | | | | 0.012 | 1.0 | q.s. | 100 | 0.0075 | | 0.012 | 0.0195 | 0.20 | 0.171 | 7.0 | 85 | 2 |
| Example | 38 | | | 0.5 | | | 0.012 | 1.0 | q.s. | 100 | | 0.0075 | 0.012 | 0.0195 | 0.20 | 0.171 | 7.0 | 80 | 2 |
| Comparative Example | 16 | | | | 0.5 | | 0.000 | 1.0 | q.s. | 100 | 0.02 | | 0.000 | 0.0200 | 0.20 | 0.171 | 7.0 | 105 | 0 |
| Example | 39 | | | | | 0.5 | 0.000 | 1.0 | q.s. | 100 | | 0.020 | 0.000 | 0.0200 | 0.20 | 0.171 | 7.0 | 86 | 2 |

| | | | | | | | | | | | | | | | | | | | |
|---|---|---|---|---|---|---|---|---|---|---|---|---|---|---|---|---|---|---|---|
| ^{*)} is a heat-resistance-improving substance (substance X: enzymatically treated lecithin, organic acid monoglyceride, ascorbic acid fatty acid ester) | | | | | | | | | | | | | | | | | | | |

As is apparent from Examples and Comparative Examples in Table 4, incorporation of the enzymatically treated lecithin A, which is the heat-resistance-improving substance, into the diluted aqueous phase at the time of dilution, that is, at the time of preparing the nanoemulsion-containing compositions, at a mass ratio of 0.2 relative to the oil phase, successfully suppressed the increase in the emulsion particle size of the nanoemulsion due to sterilization (Example 36). It was also confirmed that, even when the contents of the enzymatically treated lecithin A in the nanoemulsion-containing compositions were the same as each other, higher emulsion stability was achieved when the proportion of the enzymatically treated lecithin A added to the diluted aqueous phase was larger during preparation of the nanoemulsion-containing compositions (Examples 36 to 38). When the enzymatically treated lecithin A was not added to the diluted aqueous phase but to the oil-in-water nanoemulsion, addition to the oil phase (Comparative Example 16) showed no effect, whereas addition to the aqueous phase (Example 39) was effective.

### (Selection of heat-resistance-improving substance)

Nanoemulsion-containing compositions were prepared using the oil-in-water nanoemulsion A1 or B according to the formulation shown in Tables 5 to 8. Subsequently, each of the compositions was filled in a retort container and sterilized at 121°C for 30 minutes (F value: 33) by a retort sterilizer. Next, the emulsion particle size was measured and evaluated in the same manner. The results are summarized in Tables 5 to 8.

**(Table 5) Comparison of various enzymatically decomposed lecithins**

| | | Example 40 | Example 41 | Example 42 | Example 43 | Example 44 | Example 45 | Example 46 | Example 47 | Example 48 | Example 49 | Example 50 | Example 51 | Example 52 | Example 53 | Example 54 | Comparative Example 17 | Comparative Example 18 | Comparative Example 19 |
|---|---|---|---|---|---|---|---|---|---|---|---|---|---|---|---|---|---|---|---|
| Nanoemulsion containing composition (mass%) | O/W nanoemulsion A1 | 0.50 | 0.50 | 0.50 | 0.50 | 0.50 | 0.50 | 0.50 | 0.50 | 0.50 | 0.50 | 0.50 | 0.50 | 0.50 | 0.50 | 0.50 | 0.50 | 0.50 | 0.50 |
| | Enzymatically decomposed lecithin A^{*)} | 0.02 | 0.03 | 0.05 | 0.10 | 0.30 | | | | | | | | | | | | | |
| | Enzymatically decomposed lecithin B^{*)} | | | | | | 0.02 | 0.03 | 0.05 | 0.10 | 0.30 | | | | | | | | |
| | Enzymatically decomposed lecithin C^{*)} | | | | | | | | | | | 0.02 | 0.03 | 0.05 | 0.10 | 0.30 | | | |
| | Lecithin | | | | | | | | | | | | | | | | 0.07 | | |
| | Hydrophilic emulsifier A | | | | | | | | | | | | | | | | | 0.07 | |
| | Hydrophilic emulsifier B | | | | | | | | | | | | | | | | | | 0.07 |
| | Sodium chloride | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | Water | q.s. | q.s. | q.s. | q.s. | q.s. | q.s. | q.s. | q.s. | q.s. | q.s. | q.s. | q.s. | q.s. | q.s. | q.s. | q.s. | q.s. | q.s. |
| | Total | 100 | 100 | 100 | 100 | 100 | 100 | 100 | 100 | 100 | 100 | 100 | 100 | 100 | 100 | 100 | 100 | 100 | 100 |
| Parameters | Ratio of substance X ^{*)} to oil phase (mass ratio) | 0.20 | 0.30 | 0.50 | 1.00 | 3.00 | 0.20 | 0.30 | 0.50 | 1.00 | 3.00 | 0.20 | 0.30 | 0.50 | 1.00 | 3.00 | 0.00 | 0.00 | 0.00 |
| | Ionic strength (mol/L) | 0.171 | 0.171 | 0.171 | 0.171 | 0.171 | 0.171 | 0.171 | 0.171 | 0.171 | 0.171 | 0.171 | 0.171 | 0.171 | 0.171 | 0.171 | 0.171 | 0.171 | 0.171 |
| | pH | 7.0 | 7.0 | 7.0 | 7.0 | 7.0 | 7.0 | 7.0 | 7.0 | 7.0 | 7.0 | 7.0 | 7.0 | 7.0 | 7.0 | 7.0 | 7.0 | 7.0 | 7.0 |
| Results | Emulsion particle size (nm) | 89 | 75 | 68 | 60 | 73 | 82 | 74 | 67 | 65 | 77 | 77 | 71 | 67 | 65 | 76 | 424 | 147 | 159 |
| | Evaluation | 2 | 3 | 4 | 4 | 3 | 2 | 3 | 4 | 4 | 3 | 3 | 3 | 4 | 4 | 3 | 0 | 0 | 0 |

^{*)} is a heat-resistance-improving substance (substance X: enzymatically treated lecithin, organic acid monoglyceride, ascorbic acid fatty acid ester)

**(Table 6) Comparison of enzymatically decomposed lecithin, fatty acid glycerin ester, and ascorbic acid fatty acid ester**

| | | Example 55 | Example 56 | Example 57 | Example 58 | Example 59 | Example 60 | Example 61 | Example 62 | Example 63 | Example 64 | Example 65 | Example 66 | Example 67 |
|---|---|---|---|---|---|---|---|---|---|---|---|---|---|---|
| Nanoemulsion-containing composition (mass%) | O/W nanoemulsion B | 0.50 | 0.50 | 0.50 | 0.50 | 0.50 | 0.50 | 0.50 | 0.50 | 0.50 | 0.50 | 0.50 | 0.50 | 0.50 |
| | Enzymatically decomposed lecithin B^{*)} | 0.03 | 0.05 | 0.30 | | | | | | | | | | |
| | Enzymatically decomposed lecithin C^{*)} | | | | 0.07 | 0.10 | 0.30 | | | | | | | |
| | Succinic acid fatty acid monoglyceride^{*)} | | | | | | | 0.04 | 0.10 | | | | | |
| | Diacetyl tartaric acid fatty acid monoglyceride ^{*)} | | | | | | | | | 0.07 | 0.10 | 0.21 | | |
| | Citric acid fatty acid monoglyceride ^{*)} | | | | | | | | | | | | 0.10 | |
| | ascorbyl palmitate^{*)} | | | | | | | | | | | | | 0.10 |
| | Sodium chloride | 1.0 | 1.0 | 1.0 | 1.0 | 1.0 | 1.0 | 1.0 | 1.0 | 1.0 | 1.0 | 1.0 | 1.0 | 1.0 |
| | Water | q.s. | q.s. | q.s. | q.s. | q.s. | q.s. | q.s. | q.s. | q.s. | q.s. | q.s. | q.s. | q.s. |
| | Total | 100 | 100 | 100 | 100 | 100 | 100 | 100 | 100 | 100 | 100 | 100 | 100 | 100 |
| Parameters | Ratio of substance X ^{*)} to oil phase (mass ratio) | 0.30 | 0.50 | 3.00 | 0.70 | 1.00 | 3.00 | 0.41 | 1.00 | 0.70 | 1.00 | 2.10 | 1.00 | 1.00 |
| | Ionic strength (mol/L) | 0.171 | 0.171 | 0.171 | 0.171 | 0.171 | 0.171 | 0.171 | 0.171 | 0.171 | 0.171 | 0.171 | 0.171 | 0.171 |
| | pH | 7.0 | 7.0 | 7.0 | 7.0 | 7.0 | 7.0 | 7.0 | 7.0 | 7.0 | 7.0 | 7.0 | 7.0 | 7.0 |
| Results | Emulsion particle size (nm) | 75 | 66 | 67 | 69 | 69 | 73 | 77 | 74 | 77 | 68 | 70 | 77 | 73 |
| | Evaluation | 3 | 4 | 4 | 4 | 4 | 3 | 3 | 3 | 3 | 4 | 4 | 3 | 3 |

| | | | | | | | | | | | | | | |
|---|---|---|---|---|---|---|---|---|---|---|---|---|---|---|
| ^{*)} is a heat-resistance-improving substance (substance X: enzymatically treated lecithin, organic acid monoglyceride, ascorbic acid fatty acid ester) | | | | | | | | | | | | | | |

**(Table 7) Comparison 1 of substances other than heat-resistance-improving substance**

| | | | Nanoemulsion-containing composition (mass%) | | | | | Parameters | | | Results | |
|---|---|---|---|---|---|---|---|---|---|---|---|---|
| | | Sample | O/W nanoemulsion B | Sample | NaCl | Water | Total | Ratio of sample to oil phase (mass ratio) | Ionic strength (mol/L) | pH | Emulsion particle size (nm) | Evaluation |
| Comparative Example | 20 | Lecithin | 0.5 | 0.07 | 1.0 | q.s. | 100 | 0.7 | 0.171 | 7.0 | 527 | 0 |
| Comparative Example | 21 | Soybean peptide | 0.5 | 0.10 | 1.0 | q.s. | 100 | 1.00 | 0.171 | 7.0 | 444 | 0 |
| Comparative Example | 22 | Soybean protein | 0.5 | 0.10 | 1.0 | q.s. | 100 | 1.00 | 0.171 | 7.0 | 1,832 | 0 |
| Comparative Example | 23 | Sucrose | 0.5 | 0.10 | 1.0 | q.s. | 100 | 1.00 | 0.171 | 7.0 | 274 | 0 |
| Comparative Example | 24 | Glucose | 0.5 | 0.10 | 1.0 | q.s. | 100 | 1.00 | 0.171 | 7.0 | 286 | 0 |
| Comparative Example | 25 | Fructose | 0.5 | 0.10 | 1.0 | q.s. | 100 | 1.00 | 0.171 | 7.0 | 278 | 0 |
| Comparative Example | 26 | Xylose | 0.5 | 0.10 | 1.0 | q.s. | 100 | 1.00 | 0.171 | 7.0 | 332 | 0 |
| Comparative Example | 27 | Trehalose | 0.5 | 0.10 | 1.0 | q.s. | 100 | 1.00 | 0.171 | 7.0 | 465 | 0 |
| Comparative Example | 28 | Water-soluble soybean polysaccharide | 0.5 | 0.10 | 1.0 | q.s. | 100 | 1.00 | 0.171 | 7.0 | 313 | 0 |
| Comparative Example | 29 | Gum arabic | 0.5 | 0.10 | 1.0 | q.s. | 100 | 1.00 | 0.171 | 7.0 | 197 | 0 |
| Comparative Example | 30 | Soybean saponin | 0.5 | 0.10 | 1.0 | q.s. | 100 | 1.00 | 0.171 | 7.0 | 659 | 0 |
| Comparative Example | 31 | Quillaja saponin | 0.5 | 0.10 | 1.0 | q.s. | 100 | 1.00 | 0.171 | 7.0 | 143 | 0 |
| Comparative Example | 32 | Soybean isoflavone | 0.5 | 0.10 | 1.0 | q.s. | 100 | 1.00 | 0.171 | 7.0 | 464 | 0 |
| Comparative Example | 33 | L-Ascorbic acid | 0.5 | 0.10 | 1.0 | q.s. | 100 | 1.00 | 0.171 | 7.0 | 399 | 0 |
| Comparative Example | 34 | Citric acid | 0.5 | 0.10 | 1.0 | q.s. | 100 | 1.00 | 0.171 | 7.0 | 388 | 0 |
| Comparative Example | 35 | Malic acid | 0.5 | 0.10 | 1.0 | q.s. | 100 | 1.00 | 0.171 | 7.0 | 375 | 0 |
| Comparative Example | 36 | Disodium succinate | 0.5 | 0.10 | 1.0 | q.s. | 100 | 1.00 | 0.171 | 7.0 | 377 | 0 |
| Comparative Example | 37 | Tartaric acid | 0.5 | 0.10 | 1.0 | q.s. | 100 | 1.00 | 0.171 | 7.0 | 414 | 0 |
| Comparative Example | 38 | Sodium oleate | 0.5 | 0.10 | 1.0 | q.s. | 100 | 1.00 | 0.171 | 7.0 | 199 | 0 |
| Comparative Example | 39 | Polyoxyethylene sorbitan monolaurate | 0.5 | 0.10 | 1.0 | q.s. | 100 | 1.00 | 0.171 | 7.0 | 472 | 0 |
| Comparative Example | 40 | Polyoxyethylene sorbitan monostearate | 0.5 | 0.10 | 1.0 | q.s. | 100 | 1.00 | 0.171 | 7.0 | 422 | 0 |
| Comparative Example | 41 | Polyoxyethylene sorbitan monooleate | 0.5 | 0.10 | 1.0 | q.s. | 100 | 1.00 | 0.171 | 7.0 | 435 | 0 |
| Comparative Example | 42 | Potassium dihydrogen phosphate | 0.5 | 0.10 | 1.0 | q.s. | 100 | 1.00 | 0.171 | 7.0 | 387 | 0 |

**(Table 8) Comparison 2 of substances other than heat-resistance-improving substance**

| | | | Nanoemulsion-containing composition (mass%) | | | | | Parameters | | | Results | |
|---|---|---|---|---|---|---|---|---|---|---|---|---|
| | | Sample | O/W nanoemulsion B | Sample | NaCl | Water | Total | Ratio of sample to oil phase (mass ratio) | Ionic strength (mol/L) | pH | Emulsion particle size (nm) | Evaluation |
| Comparative Example | 43 | Disodium hydrogen phosphate | 0.5 | 0.10 | 1.0 | q.s. | 100 | 0.00 | 0.171 | 7.0 | 381 | 0 |
| Comparative Example | 44 | Sodium acetate | 0.5 | 0.10 | 1.0 | q.s. | 100 | 0.00 | 0.171 | 7.0 | 378 | 0 |
| Comparative Example | 45 | Sodium alginate | 0.5 | 0.10 | 1.0 | q.s. | 100 | 0.00 | 0.171 | 7.0 | 779 | 0 |
| Comparative Example | 46 | Aspartic acid | 0.5 | 0.10 | 1.0 | q.s. | 100 | 0.00 | 0.171 | 7.0 | 432 | 0 |
| Comparative Example | 47 | Glutamic acid | 0.5 | 0.10 | 1.0 | q.s. | 100 | 0.00 | 0.171 | 7.0 | 382 | 0 |
| Comparative Example | 48 | Lysine | 0.5 | 0.10 | 1.0 | q.s. | 100 | 0.00 | 0.171 | 7.0 | 367 | 0 |
| Comparative Example | 49 | Arginine | 0.5 | 0.10 | 1.0 | q.s. | 100 | 0.00 | 0.171 | 7.0 | 496 | 0 |
| Comparative Example | 50 | Histidine | 0.5 | 0.10 | 1.0 | q.s. | 100 | 0.00 | 0.171 | 7.0 | 438 | 0 |
| Comparative Example | 51 | Serine | 0.5 | 0.10 | 1.0 | q.s. | 100 | 0.00 | 0.171 | 7.0 | 433 | 0 |
| Comparative Example | 52 | Threonine | 0.5 | 0.10 | 1.0 | q.s. | 100 | 0.00 | 0.171 | 7.0 | 385 | 0 |
| Comparative Example | 53 | Cysteine | 0.5 | 0.10 | 1.0 | q.s. | 100 | 0.00 | 0.171 | 7.0 | 500 | 0 |
| Comparative Example | 54 | Asparagine | 0.5 | 0.10 | 1.0 | q.s. | 100 | 0.00 | 0.171 | 7.0 | 552 | 0 |
| Comparative Example | 55 | Glutamine | 0.5 | 0.10 | 1.0 | q.s. | 100 | 0.00 | 0.171 | 7.0 | 445 | 0 |
| Comparative Example | 56 | Tyrosine | 0.5 | 0.10 | 1.0 | q.s. | 100 | 0.00 | 0.171 | 7.0 | 559 | 0 |
| Comparative Example | 57 | Glycine | 0.5 | 0.10 | 1.0 | q.s. | 100 | 0.00 | 0.171 | 7.0 | 362 | 0 |
| Comparative Example | 58 | Alanine | 0.5 | 0.10 | 1.0 | q.s. | 100 | 0.00 | 0.171 | 7.0 | 388 | 0 |
| Comparative Example | 59 | Proline | 0.5 | 0.10 | 1.0 | q.s. | 100 | 0.00 | 0.171 | 7.0 | 434 | 0 |
| Comparative Example | 60 | Valine | 0.5 | 0.10 | 1.0 | q.s. | 100 | 0.00 | 0.171 | 7.0 | 434 | 0 |
| Comparative Example | 61 | Leucine | 0.5 | 0.10 | 1.0 | q.s. | 100 | 0.00 | 0.171 | 7.0 | 434 | 0 |
| Comparative Example | 62 | Isoleucine | 0.5 | 0.10 | 1.0 | q.s. | 100 | 0.00 | 0.171 | 7.0 | 434 | 0 |
| Comparative Example | 63 | Methionine | 0.5 | 0.10 | 1.0 | q.s. | 100 | 0.00 | 0.171 | 7.0 | 450 | 0 |
| Comparative Example | 64 | Phenylalanine | 0.5 | 0.10 | 1.0 | q.s. | 100 | 0.00 | 0.171 | 7.0 | 462 | 0 |
| Comparative Example | 65 | Tryptophan | 0.5 | 0.10 | 1.0 | q.s. | 100 | 0.00 | 0.171 | 7.0 | 442 | 0 |

As is apparent from Examples and Comparative Examples in Tables 5 to 8, it was found that the substances capable of improving heat resistance, that is, suppressing the increase in the emulsion particle size of the nanoemulsion due to sterilization, are the enzymatically treated lecithin, the organic acid monoglyceride, and the ascorbic acid fatty acid ester.

### (Application to Food)

Consomme soup and soup base were prepared as nanoemulsion-containing foods using the oil-in-water nanoemulsion A1 or B according to the formulation shown in Table 9. Subsequently, each of them was filled in a retort container and sterilized at 121°C for 30 minutes (F value: 33) by a retort sterilizer. Next, the emulsion particle size was measured and evaluated in the same manner. The results are summarized in Table 9.

**(Table 9) Application to various foods**

| | | Nanoemulsion-containing composition (mass%) | | | | | | | | Parameters | | Results | | |
|---|---|---|---|---|---|---|---|---|---|---|---|---|---|---|
| | | O/W nanoemulsion A1 | O/W nanoemulsion B | Enzymatically decomposed lecithin A^{*)} | NaCl | Bouillon (western-style soup stock) | Soup base (for dilution) | Water | Total | Ratio of substance X^{*)} to oil phase (mass ratio) | Ionic strength (mol/L) | pH | Emulsion particle size (nm) | Evaluation |
| Comparative Example | 66 | 0.5 | | | 0.3 | 1.33 | | q.s. | 100 | 0.0 | 0.171 | 5.7 | 111 | 0 |
| Comparative Example | 67 | | 0.5 | | 0.3 | 1.33 | | q.s. | 100 | 0.0 | 0.171 | 5.7 | 421 | 0 |
| Example | 68 | 0.5 | | 0.05 | 0.3 | 1.33 | | q.s. | 100 | 0.5 | 0.171 | 5.7 | 65 | 4 |
| Example | 69 | | 0.5 | 0.05 | 0.3 | 1.33 | | q.s. | 100 | 0.5 | 0.171 | 5.7 | 63 | 4 |
| Comparative Example | 68 | 0.5 | | | | | 99.50 | | 100 | 0.0 | 1.873 | 5.3 | 177 | 0 |
| Comparative Example | 69 | 5.0 | | | | | 95.00 | | 100 | 0.0 | 1.788 | 5.3 | 202 | 0 |
| Example | 70 | 0.5 | | 0.10 | | | 99.40 | | 100 | 1.0 | 1.871 | 5.3 | 80 | 2 |
| Example | 71 | 5.0 | | 0.25 | | | 94.75 | | 100 | 0.3 | 1.783 | 5.3 | 86 | 2 |
| Comparative Example | 70 | | 0.5 | | | | 99.50 | | 100 | 0.0 | 1.873 | 5.3 | 316 | 0 |
| Comparative Example | 71 | | 5.0 | | | | 95.00 | | 100 | 0.0 | 1.788 | 5.3 | 175 | 0 |
| Example | 72 | | 0.5 | 0.10 | | | 99.40 | | 100 | 1.0 | 1.871 | 5.3 | 69 | 4 |
| Example | 73 | | 5.0 | 0.25 | | | 94.75 | | 100 | 0.3 | 1.783 | 5.3 | 72 | 3 |

| | | | | | | | | | | | | | | |
|---|---|---|---|---|---|---|---|---|---|---|---|---|---|---|
| ^{*)} is a heat-resistance-improving substance (substance X: enzymatically treated lecithin, organic acid monoglyceride, ascorbic acid fatty acid ester) | | | | | | | | | | | | | | |

As is apparent from the Examples and Comparative Examples shown in Table 9, incorporation of the heat-resistance-improving substance during preparation of the nanoemulsion-containing foods successfully suppressed the increase in the emulsion particle size of the nanoemulsion due to sterilization, even in a food which is a mixed system containing a composite component other than the principal component, over a wide range of nanoemulsion contents and even at high ionic strength. Thus, the present invention is considered applicable to a wide variety of foods.

### Industrial Applicability

According to the present invention, a nanoemulsion-containing composition having a small emulsion particle size and excellent emulsion stability under high-temperature heating, such as retort sterilization, in an aqueous solution with high ionic strength can be provided, and the function of the nanoemulsion can be exhibited in a wide range of water-based foods.

## Claims

1. A method for producing a nanoemulsion-containing composition, the method comprising all of the following (1) to (3):
(1) providing an oil-in-water nanoemulsion having an emulsion particle size of 100 nm or less;
(2) diluting the oil-in-water nanoemulsion of (1), and preparing a nanoemulsion-containing composition satisfying the following requirements (A) and (B); and
(3) adding one or more selected from an enzymatically treated lecithin, an organic acid monoglyceride, and an ascorbic acid fatty acid ester to an aqueous phase of the oil-in-water nanoemulsion of (1) and/or an aqueous phase of the nanoemulsion-containing composition of (2) in an amount of 0.1 to 20 times the mass of an oil phase of the oil-in-water nanoemulsion of (1);
(A): the nanoemulsion-containing composition comprises 0.01 to 5 mass% of the oil-in-water nanoemulsion of (1) as an oil phase; and
(B): the nanoemulsion-containing composition has an ionic strength of 0.02 to 5 mol/ L.

2. The method for producing a nanoemulsion-containing composition according to claim 1, wherein the oil-in-water nanoemulsion to be diluted comprises 1 to 35 mass% of the oil phase.

3. The method for producing a nanoemulsion-containing composition according to claim 1, wherein the nanoemulsion comprises a protein material having the following properties (1) and (2):
(1): after an aqueous solution having a crude protein content of 20 mass% is heated at 80°C for 30 minutes, the aqueous solution has a viscosity of 10,000 mPa·s or less as measured at 25°C; and
(2): the protein material has a TCA solubilization rate of 30% to 95% in 0.22 M TCA.

4. The method for producing a nanoemulsion-containing composition according to claim 1, wherein the oil-in-water nanoemulsion to be diluted comprises 1 to 35 mass% of the oil phase, and the nanoemulsion comprises a protein material having the following properties (1) and (2):
(1): after an aqueous solution having a crude protein content of 20 mass% is heated at 80°C for 30 minutes, the aqueous solution has a viscosity of 10,000 mPa·s or less as measured at 25°C; and
(2): the protein material has a TCA solubilization rate of 30% to 95% in 0.22 M TCA.

5. A method for producing a nanoemulsion-containing food, comprising further heat-sterilizing the nanoemulsion-containing composition according to any one of claims 1 to 3.

6. A method for producing a nanoemulsion-containing food, comprising further heat-sterilizing the nanoemulsion-containing composition according to claim 4.

7. A method for improving heat resistance of a nanoemulsion-containing composition, the method comprising adding one or more selected from an enzymatically treated lecithin, an organic acid monoglyceride, and an ascorbic acid fatty acid ester to an aqueous phase of a nanoemulsion-containing composition satisfying the following requirements (A) and (B) in an amount of 0.1 to 20 times the mass of an oil phase of an oil-in-water nanoemulsion of (A):
(A): the nanoemulsion-containing composition contains 0.01 to 5 mass% of the oil-in-water nanoemulsion having an emulsion particle size of 100 nm or less as an oil phase; and
(B): the nanoemulsion-containing composition has an ionic strength of 0.02 to 5 mol/ L.

8. The method for improving heat resistance of a nanoemulsion-containing composition according to claim 7, wherein the improvement in heat resistance is with respect to heating for the purpose of sterilization.

9. The method for improving heat resistance of a nanoemulsion-containing composition according to claim 7 or 8, wherein the oil-in-water nanoemulsion comprises a protein material having the following properties (1) and (2):
(1): after an aqueous solution having a crude protein content of 20 mass% is heated at 80°C for 30 minutes, the aqueous solution has a viscosity of 10,000 mPa·s or less as measured at 25°C; and
(2): the protein material has a TCA solubilization rate of 30% to 95% in 0.22 M TCA.

10. The method for improving heat resistance of a nanoemulsion-containing composition according to claim 9, wherein the nanoemulsion-containing composition is a nanoemulsion-containing food.

11. The method for improving heat resistance of a nanoemulsion-containing composition according to claim 7, wherein the improvement in heat resistance is with respect to heating for the purpose of sterilization, and the oil-in-water nanoemulsion comprises a protein material having the following properties (1) and (2):
(1): after an aqueous solution having a crude protein content of 20 mass% is heated at 80°C for 30 minutes, the aqueous solution has a viscosity of 10,000 mPa·s or less as measured at 25°C; and
(2): the protein material has a TCA solubilization rate of 30% to 95% in 0.22 M TCA.

12. The method for improving heat resistance of a nanoemulsion-containing composition according to claim 11, wherein the nanoemulsion-containing composition is a nanoemulsion-containing food.
